# EUROPEAN PATENT SPECIFICATION

(11) **EP 4 074 203 B1**
(45) Date of publication and mention of the grant of the patent: **06.12.2023**
(21) Application number: 20903897.5
(22) Date of filing: 06.11.2020
(51) Int. Cl.: A24F 40/485, A24F 40/10, A24F 40/40

(54) **ATOMIZER AND ELECTRONIC ATOMIZATION DEVICE**
ZERSTÄUBER UND ELEKTRONISCHE ZERSTÄUBUNGSVORRICHTUNG
ATOMISEUR ET DISPOSITIF D'ATOMISATION ÉLECTRONIQUE

(30) Priority: 17.12.2019 CN 201922279855 U
(43) Date of publication of application: 19.10.2022
(73) Proprietor: Shenzhen Smoore Technology Limited, Shenzhen, Guangdong 518102 (CN)
(72) Inventor: TAN, Junwei, Shenzhen, Guangdong 518102 (CN); WEN, Zhihua, Shenzhen, Guangdong 518102 (CN); CHEN, Yongguang, Shenzhen, Guangdong 518102 (CN); HE, Danchong, Shenzhen, Guangdong 518102 (CN)
(74) Representative: De Arpe Tejero, Manuel
(86) International application number: PCT/CN2020/127083
(87) International publication number: WO 2021/120919

(56) References cited:
- EP-A1- 3 393 278
- EP-A2- 3 469 937
- CN-A- 105 768 233
- CN-U- 206 213 284
- CN-U- 207 011 690
- CN-U- 207 855 035
- CN-U- 211 746 967
- US-A1- 2015 157 054
- US-A1- 2016 270 446
- US-A1- 2017 119 055
- US-A1- 2019 230 986

## Description

### TECHNICAL FIELD

The present disclosure relates to the field of electronic atomization devices, and in particular to an atomizer and an electronic atomization device.

### BACKGROUND

An existing electronic atomization device includes an atomizer and a controller. The controller includes a battery, a circuit board, and an airflow sensor, and the atomizer includes a liquid-storing chamber storing atomizing materials, a atomization element, and an airflow channel. A vent hole is generally provided at a bottom of the atomizer, so that one end of the airflow channel is communicated to the airflow sensor of the controller, and the airflow sensor can detect the change of the airflow, so that the electronic atomization device may be started. However, during transportating or using, liquid leakage may occur in the liquid-storing chamber of the atomizer due to air pressure changes or other reasons, and the leaking of liquid may enter the controller through the vent hole at the bottom of the atomizer, and the airflow sensor or the battery could easily polluted and damaged.

Documents US2019/230986A1, US2016/270446A1, EP3393278A1, US2015/157054A1, EP3469937A2 describe electronic atomization devices which describe means for prevention leakage and/or pressure equalisation means. For example, US2019/230986A1 relates to an aerosol-generating device that is configured to reduce and/or minimize leaking of liquid aerosol-forming substrate or condensates, wherein the device may include a housing, a reservoir, an atomizer, and a valve within the mouthpiece of the housing.

### SUMMARY

This disclosure provides an atomizer and an electronic atomization device, to overcome the technical problem that the atomizer is damaged due to liquid leakage of a liquid-storing chamber of the atomizer.

In order to overcome the technical problem, a first aspect is provided by the present invention is an atomizer, includes: a housing, provided with an air inlet and an air outlet; an airflow channel, formed in the housing and running through the air inlet and the air outlet; a liquid-storing chamber, disposed in the housing; a atomization assembly, disposed in the airflow channel and in fluid communication with the liquid-storing chamber; an air intake valve, disposed in the airflow channel between the air inlet and the atomization assembly, where an air outlet portion of the air intake valve is disposed close to the atomization assembly, an air inlet portion of the air intake valve is disposed away from the atomization assembly, and a leaked liquid storage for storing leaked liquid is formed between the air intake valve and the atomization assembly; a gulp valve, disposed in the housing, where an air outlet portion of the gulp valve is located in the liquid-storing chamber, and an air inlet portion of the gulp valve is in communication with external air; and a mouthpiece valve, disposed in the airflow channel and located between the air outlet and the atomization assembly, where an air outlet portion of the mouthpiece valve is disposed facing the air outlet, and an air inlet of the mouthpiece valve is disposed facing the atomization assembly.

According to an embodiment of this disclosure, the air intake valve is opened when pressure of the air inlet portion of the air intake valve is greater than pressure of the air outlet portion of the air intake valve in the airflow channel by at least 100 pa.

According to an embodiment of this disclosure, the gulp valve is located on a first end provided with the air outlet of the housing; and/or the gulp valve is located on a second end provided with the air inlet of the housing; and/or the gulp valve is located on a side surface between the first end and the second end of the housing.

According to an embodiment of this disclosure, there are three gulp valves, and the three gulp valves are respectively located on the first end provided with the air outlet of the housing, the second end provided with the air inlet of the housing, and the side surface between the first end and the second end of the housing.

According to an embodiment of this disclosure, the gulp valve is opened when pressure of the air inlet portion of the gulp valve is greater than pressure in liquid-storing chamber by at least 100 pa.

According to an embodiment of this disclosure, the mouthpiece valve is opened when pressure of the air inlet portion side of the mouthpiece valve is greater than pressure outside the air outlet portion side of the mouthpiece valve by at least 100 pa.

According to an embodiment of this disclosure, the air intake valve, the gulp valve, and the mouthpiece valve are all one-way valves, and each of the one-way valve includes: a base, provided with a through hole; and a deformable wall, disposed on the through hole and provided with a notch, where one side of the deformable wall connected to the through hole forms the air inlet portion, and the notch forms the air outlet portion.

According to an embodiment of this disclosure, the deformable wall includes two first deformable walls, and the two first deformable walls extends outward from the through hole and gradually draw close to each other to form a strip-shaped end and form the notch is elongated and formed at the strip-shaped end.

According to an embodiment of this disclosure, the deformable wall is curved to form a cylinder, the deformable wall extends outward from the through hole and is closed to form a hemispherical end, and the notch is cross-shaped and formed at the hemispherical end.

According to an embodiment of this disclosure, the deformable wall is curved to form a cylinder, the deformable wall extends outward from the through hole and is closed to form a planar end, and two notch is arc-shapedes are formed at the planar end, wherein the notch is inferior arc shaped.

According to an embodiment of this disclosure, the deformable wall is curved to form a cylinder, the deformable wall extends outward from the through hole and is closed to form a planar end, and the notch is arc-shaped and formed at the planar end, wherein the notch is in a shape of a major arc, and a support member supporting the planar end is disposed in the deformable wall.

According to an embodiment of this disclosure, the deformable wall is curved to form a cylinderr, the deformable wall extends outward from the through hole and is closed to form a planar end, and the notch is arc-shaped and formed at the side surface.

According to an embodiment of this disclosure, the housing includes a mounting base, and the mounting base is configured to support the atomization assembly and the mounting base is configured to define the air inlet.

In order to overcome the technical problem, according to a second aspect, an electronic atomization device is provided and includes the atomizer according to any one of above mentioned.

According to an embodiment of this disclosure, the electronic atomization device includes a power supply assembly configured to supply power to the atomizer.

Beneficial effects of present disclosure: with the air intake valve of the atomization assembly, even if liquid in the liquid-storing chamber is leaked through the atomization assembly, the liquid can accumulate in the leaked liquid storage rather than being leaked through the air intake valve, thereby the air intake valve could prevent the leaked liquid from polluting and damaging other elements after leaked from the air inlet. In addition, after sucking, the pressure in the airflow channel is increased, and aerosol reflux may occur. In a case without the air intake valve, the aerosol may flow through the air inlet, and run into an outer wall of the atomizer, and be condensed into liquid. However, the air intake valve can prevent occurrence of aerosol reflux.

### BRIEF DESCRIPTION OF THE DRAWINGS

In order to more clearly illustrate the technical solutions of the embodiments of the present disclosure, the drawings for the description of the embodiment will be described in brief. Obviously, the drawings in the following description are only some of the embodiments of the present disclosure. For a person of ordinary skill in the art, other drawings may be obtained based on the following drawings without any creative work.
FIG. 1 is a three-dimensional schematic structural diagram of an atomizer according to an embodiment of present disclosure;
FIG. 2 is a schematic structural cross-sectional view of an atomizer according to an embodiment of present disclosure;
FIG. 3 is another schematic structural cross-sectional view of an atomizer according to an embodiment of present disclosure;
FIG. 4 is a three-dimensional schematic structural diagram of a one-way valve of an atomizer according to an embodiment of present disclosure;
FIG. 5 is a three-dimensional schematic structural diagram of a one-way valve of an atomizer according to another embodiment of present disclosure;
FIG. 6 is a three-dimensional schematic structural diagram of a one-way valve of an atomizer according to still another embodiment of present disclosure;
FIG. 7 is a three-dimensional schematic structural diagram of a one-way valve of an atomizer according to still another embodiment of present disclosure;
FIG. 8 is a schematic structural cross-sectional view of the one-way valve shown in FIG. 7;
FIG. 9 is a three-dimensional schematic structural diagram of a one-way valve of an atomizer according to still another embodiment of present disclosure; and
FIG. 10 is a three-dimensional schematic structural diagram of an electronic atomization device according to an embodiment of present disclosure.

### DETAILED DESCRIPTION

Technical solutions of the embodiments of the present disclosure will be clearly and comprehensively described by referring to the accompanying drawings. Obviously, the embodiments described herein are only a part of, but not all of, the embodiments of the present disclosure. Based on the embodiments in the present disclosure, all other embodiments obtained by a person of ordinary skill in the art without any creative work shall fall within the scope of the present disclosure.

It should be noted that directional indications if present (such as up, down, left, right, front, back, ......) in the embodiments of the present disclosure are only expressed to explain relative positional relationships and movement between components in a particular attitude (as shown in the drawings). When the particular attitude is changed, the directional indications shall also be changed accordingly.

In addition, when using expressions "first", "second", and the like in the embodiment of the present disclosure, the expressions "first", "second", and the like are utilized for descriptive purposes only, and shall not be interpreted as indicating or implying relative importance or implicitly specifying the number of an indicated technical feature. Therefore, features defined by "first" and "second" may explicitly or implicitly include at least one of the such feature. In addition, technical solutions of various embodiments may be combined with each other, but only on the basis that the technical solutions may be achieved by a person of ordinary skill in the art. When combination of technical solutions appears to be contradictory or unachievable, such combination of technical solutions shall be interpreted as inexistence and excluded from the scope of the present disclosure.

The term "comprising" means "including, but not necessarily limited to"; it specifically indicates open-ended inclusion or membership in a so-described combination, group, series and the like. It should be noted that references to "an" or "one" embodiment in present disclosure are not necessarily to the same embodiment, and such references mean at least one. Unless otherwise defined, all technical and scientific terms used herein have the same meaning as a skilled person in the art would understand. The terminology used in the description of the present disclosure is for the purpose of describing particular embodiments and is not intended to limit the disclosure.

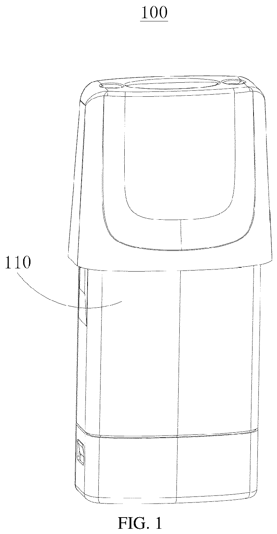

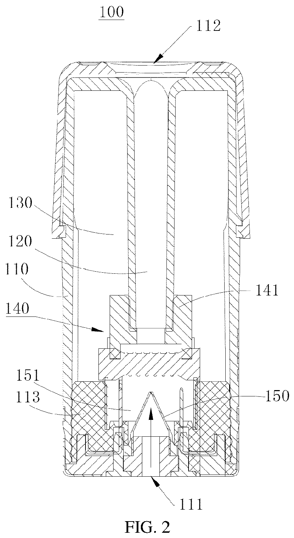

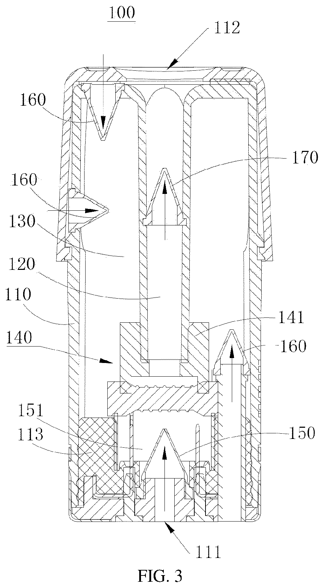

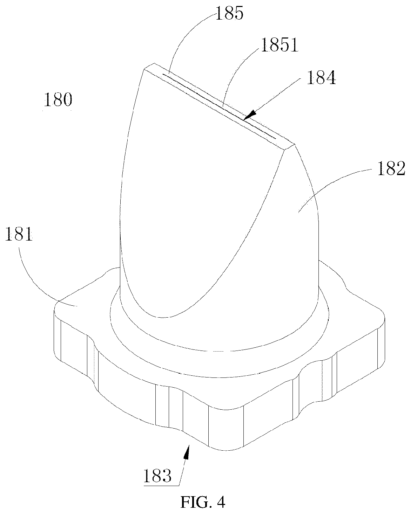

Referring to FIG. 1 to FIG. 4, FIG. 1 is a three-dimensional schematic structural diagram of an atomizer according to an embodiment of present disclosure; FIG. 2 is a schematic structural cross-sectional view of an atomizer according to an embodiment of present disclosure; FIG. 3 is another schematic structural cross-sectional view of an atomizer according to an embodiment of present disclosure; and FIG. 4 is a three-dimensional schematic structural diagram of a one-way valve of an atomizer according to an embodiment of present disclosure.

As shown in FIG. 1 and FIG. 2, an embodiment of present disclosure provides an atomizer 100, and the atomizer includes a housing 110, an airflow channel 120, a liquid-storing chamber 130, a atomization assembly 140, and an air intake valve 150. The housing 110 is provided with an air inlet 111 and an air outlet 112, and the airflow channel 120 is formed in the housing 110 and runs through the air inlet 111 and the air outlet 112. The liquid-storing chamber 130 is disposed in the housing 110 and stores aerosol-generating material for atomizing of the atomization assembly 140, such as oil. The atomization assembly 140 is disposed in the airflow channel 120 and in fluid communication with the liquid-storing chamber 130, so that liquid in the liquid-storing chamber 130 can be supplied to the atomization assembly 140 for the atomization assembly 140 to atomize. During sucking, external air enters from the air inlet 111, carries aerosol formed by the atomization assembly 140 in the airflow channel 120, and flows out of the airflow channel 120 through the air outlet 112.

The air intake valve 150 is disposed in the airflow channel 120 between the air inlet 111 and the atomization assembly 140, an air outlet portion of the air intake valve 150 is disposed close to the atomization assembly 140, an air inlet portion of the air intake valve 150 is disposed away from the atomization assembly 140, and a leaked liquid storage 151 for storing leaked liquid is formed between the air intake valve 150 and the atomization assembly 140. When the atomizer is not in use, since pressure in the airflow channel 120 is greater than or equal to external pressure, the air intake valve 150 may keep sealed under action of a pressure difference or elasticity of the air intake valve 150. Therefore, even if liquid in the liquid-storing chamber 130 is leaked through the atomization assembly 140, the liquid can accumulate in the leaked liquid storage 151 rather than being leaked through the air intake valve 150, thereby the air intake valve 150 could prevent the leaked liquid from polluting and damaging other elements after leaked from the air inlet 111. In addition, after sucking, the pressure in the airflow channel 120 is increased, and aerosol reflux may occur. In a case without the air intake valve 150, the aerosol may flow through the air inlet 111, and run into an outer wall of the atomizer 100, and be condensed into liquid. However, the air intake valve 150 can prevent occurrence of aerosol reflux.

In an embodiment, as shown in FIG. 2, the housing 110 includes a mounting base 113, the mounting base 113 is configured to support the atomization assembly 140 and the mounting base 113 is configured to define the air inlet 111, and the air inlet 111 and the air outlet 112 are respectively located on two ends of the housing 110. The atomization assembly 140 includes a atomization core 141 supported by the mounting base 113 and fixed in the housing 110, one part of the atomization core is located in the airflow channel 120, and the other part of the atomization core is located in the liquid-storing chamber 130. The atomization core 141 may be a porous ceramic core, a liquid guiding cotton is covered on a surface of the atomization core, and the liquid guiding cotton absorbs the aerosol-generating material from the liquid-storing chamber 130 to form the aerosol.

In an embodiment, as shown in FIG. 2, in operation of the atomizer 100, a user sucks at the air outlet 112, the pressure in the airflow channel 120 is decreased, the air intake valve 150 is opened when the pressure of the air inlet portion of the air intake valve 150 is greater than the pressure in the airflow channel 120 on the air outlet portion by at least 100 pa, and the external air enters the airflow channel 120 through the air intake valve 150. It should be noted that, the pressure difference between two sides and required for opening the air intake valve 150 may be 200 pa, 500 pa, 1000 pa, 1500 pa, 2000 pa, or higher, and the pressure difference required for opening the air intake valve 150 depends on a structure and a material of the air intake valve 150. When the pressure of the air inlet portion of the air intake valve 150 required for opening the air intake valve 150 is greater than the pressure in the airflow channel 120 on the air outlet portion side by 100 pa to 2000 pa, the air intake valve 150 can not only have a better leakage-proof effect, but also can suck easily for the user.

In an embodiment, as shown in FIG. 3, the atomizer 100 further includes a gulp valve 160. The gulp valve 160 is disposed in the housing 110, an air outlet portion of the gulp valve 160 is located outside the liquid-storing chamber 130, and an air inlet portion of the gulp valve 160 is communicated with the external air. Under normal condition, the air pressure in the liquid-storing chamber 130 is greater than or equal to the air pressure of the external air, so that the gulp valve 160 may keep sealed under an action of the pressure difference or the elasticity of the gulp valve, to prevent the liquid in the liquid-storing chamber 130 from being leaked through the gulp valve 160. After the liquid in the liquid-storing chamber 130 is continuously consumed by atomizing of the atomization assembly 140, the air pressure in the liquid-storing chamber 130 is decreased, and the gulp valve 160 is opened when the pressure on the air inlet portion side of the gulp valve 160 is greater than the pressure in the liquid-storing chamber 130 by at least 100 pa. The external air enters the liquid-storing chamber 130 to supplement the air pressure in the liquid-storing chamber 130, so that a situation that the liquid cannot be seeped into the atomization assembly 140 for atomizing due to the excessively low air pressure in the liquid-storing chamber 130 is avoided, thereby the smoothness of the liquid for atomizing is improved. It should be noted that, the pressure difference between two sides and required for opening the gulp valve 160 may be 200 pa, 500 pa, 1000 pa, 1500 pa, 2000 pa, or higher, and the pressure difference required for opening the gulp valve 160 depends on a structure and a material of the gulp valve 160. When the air pressure of the air inlet portion of the gulp valve 160 required for opening the gulp valve 160 is greater than the pressure in the liquid-storing chamber 130 on the air outlet portion side by 100 pa to 2000 pa, the gulp valve 160 can supplement the air pressure in the liquid-storing chamber 130 in time, to keep the smoothness of the flowing of liquid from the liquid-storing chamber 130 for atomizing.

In an embodiment, as shown in FIG. 3, there are three gulp valves, one gulp valve 160 of the three gulp valves is located on the first end provided with the air outlet 112 of the housing 110; one gulp valve 160 of the three gulp valves is located on the second end provided with the air inlet 111 of the housing 110; and one gulp valve 160 of the three gulp valves is located on the side surface between the first end and the second end of the housing 110. In other embodiments, there may be only one gulp valve 160, and the gulp valve 160 may be located at any position of the three positions as above mentioned . Alternatively, in other embodiments, there may be alternatively two, four, or more gulp valves 160, which is not limited herein.

Further more, as shown in FIG. 3, the atomizer 100 further includes a mouthpiece valve 170. The mouthpiece valve 170 is disposed in the airflow channel 120 and located between the air outlet 112 and the atomization assembly 140, an air outlet portion of the mouthpiece valve 170 faces the air outlet 112, and an air inlet 111 of the mouthpiece valve 170 faces the atomization assembly 140. During the user sucking, the mouthpiece valve 170 is opened, and after atomizing, the aerosol may flow out from the air outlet 112 through the mouthpiece valve 170. After sucking, the mouthpiece valve 170 is sealed under an action of the elasticity of the mouthpiece valve, further prevent leaked liquid from flowing out from the air outlet 112. The mouthpiece valve 170 is opened when pressure of the air inlet portion side of the mouthpiece valve 170 is greater than pressure outside the air outlet portion side of the mouthpiece valve 170 by at least 100 pa. It should be noted that, the pressure difference between two sides and required for opening the mouthpiece valve 170 may be 200 pa, 500 pa, 1000 pa, 1500 pa, 2000 pa, or higher, and the pressure difference required for opening the mouthpiece valve 170 depends on a structure and a material of the mouthpiece valve 170. When the pressure of the air inlet portion of the mouthpiece valve 170 required for opening the mouthpiece valve 170 is greater than the pressure outside the air outlet portion side by 100 pa to 2000 pa, the mouthpiece valve 170 can not only have a better leakage-proof effect, but also can suck easily for the user.

In an embodiment, as shown in FIG. 3 and FIG. 4, the air intake valve 150, the gulp valve 160, and the mouthpiece valve 170 are all one-way valves 180, and the one-way valve 180 includes a base 181 and a deformable wall 182. The base 181 is provided with a through hole (not shown in the FIG.s), the deformable wall 182 is disposed on the through hole, the deformable wall 182 is provided with a notch 1851, one side of the deformable wall 182 connected to the through hole forms an air inlet portion 183, and an air outlet portion 184 is formed at the notch 1851. In a normal case, the notch 1851 is closed. When the pressure of the air inlet portion 183 of the deformable wall 182 is great enough to cause the deformable wall 182 to deform, the notch 1851 is opened, and air flows through the one-way valve 180.

Specifically, as shown in FIG. 4, the deformable wall 182 of the one-way valve 180 includes two first deformable walls, and the two first deformable walls gradually draw close outward through the through hole to form a strip-shaped end 185 and form the elongated notch 1851 at the strip-shaped end 185.

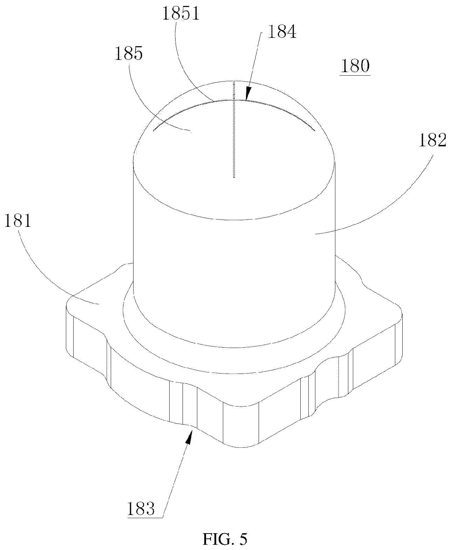

In other embodiments, referring to FIG. 5 to FIG. 9, the one-way valve 180 may have a variety of structures, and details are described below.

As shown in FIG. 5, the deformable wall 182 of the one-way valve 180 may be curved to form a cylinder, and the deformable wall 182 is closed to form a hemispherical end 185 extends outward from the through hole and is closed to form the notch 1851 is cross-shaped and formed at the hemispherical end 185, the deformable wall 182 of the cylinder is made by a deformable or a non-deformable material, and the hemispherical end 185 is made by a deformable material.

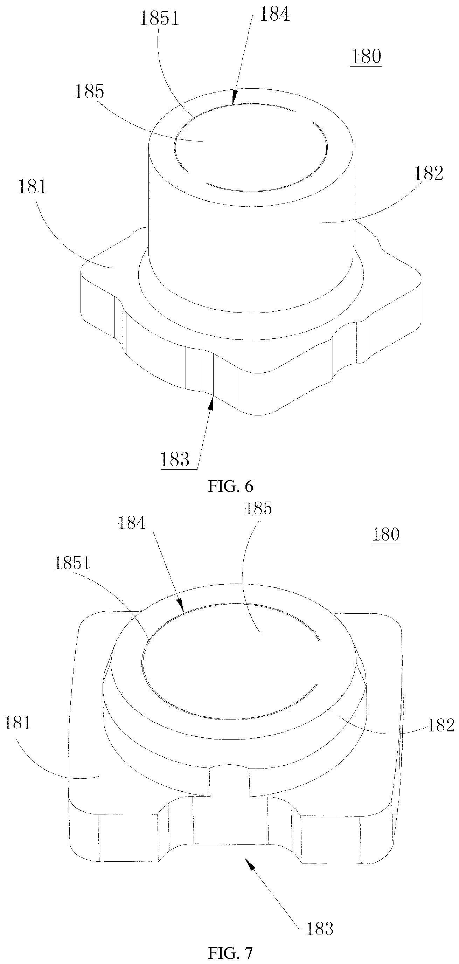

As shown in FIG. 6, the deformable wall 182 of the one-way valve 180 is curved to form a cylinder, and the deformable wall 182 is closed to form a planar end 185 extends outward from the through hole and is closed to form two arc-shaped notches 1851, the notch is cross-shaped 1851 and formed at the planar end 185, and the notch 1851 is in a shape of a inferior arc shaped, the deformable wall 182 of the cylinder is made by a deformable material or a non-deformable material, and the planar end 185 is made by a deformable material.

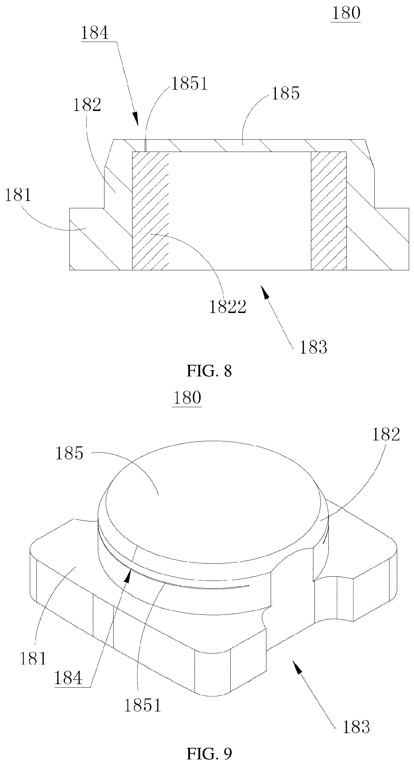

As shown in FIG. 7 and FIG. 8, the deformable wall 182 of the one-way valve 180 is curved to form a cylinder, and the deformable wall 182 is closed to form a planar end 185 extends outward from the through hole and is closed to form an arc-shaped notch 1851 at the planar end 185, the notch 1851 is in a shape of a major arc, and a support member 1822 for supporting the planar end 185 is disposed in the deformable wall 182, to prevent the planar end 185 from being opened to the side of the air inlet portion 183. The deformable wall 182 of the cylinder is made by a deformable or non-deformable material, and the planar end 185 is made by a deformable material.

As shown in FIG. 9, the deformable wall 182 of the one-way valve 180 is curved to form a cylinder, and the deformable wall 182 is closed to form a planar end 185 extends outward from the through hole and is closed to form an arc-shaped notch 1851 at the side surface.

The above mentioned one-way valve 180 of different structures may be selected according to an actual requirement or different using condition.

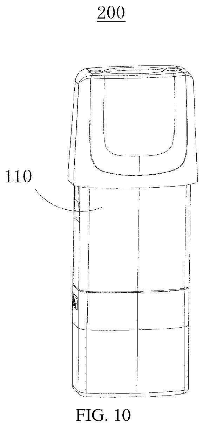

Referring to FIG. 10, FIG. 10 is a three-dimensional schematic structural diagram of an electronic atomization device according to an embodiment of present disclosure. Another embodiment of present disclosure provides an electronic atomization device 200, including the atomizer 100 in any one of the above mentioned embodiments. The electronic atomization device 200 further includes a power supply assembly, and the power supply assembly is configured to supply power to the atomizer 100, so that the atomizer 100 can atomize the aerosol-generating material to form the aerosol.

In conclusion, according to the atomizer 100 of present disclosure, the air intake valve 150 is disposed in the airflow channel 120 between the air inlet 111 and the atomization assembly 140, and the leaked liquid storage 151 for storing leaked liquid is formed between the air intake valve 150 and the atomization assembly 140. Therefore, even if liquid in the liquid-storing chamber 130 is leaked through the atomization assembly 140, the liquid can accumulate in the leaked liquid storage 151 rather than being leaked through the air intake valve 150, thereby the air intake valve 150 could preventing the leaked liquid from polluting and damaging other elements after leaked from the air inlet 111. After sucking, the air intake valve 150 can prevent occurrence of aerosol reflux. In the atomizer 100 of present disclosure, the gulp valve 160 is further disposed in the housing 110. Under normal condition, the air pressure in the liquid-storing chamber 130 is greater than or equal to the air pressure of the external air, so that the gulp valve 160 may keep sealed under an action of the pressure difference or the elasticity of the gulp valve, to prevent the liquid in the liquid-storing chamber 130 from being leaked through the gulp valve 160. When the air pressure in the liquid-storing chamber 130 is insufficient, the gulp valve 160 can supplement the air pressure in the liquid-storing chamber 130 in time, to keep the smoothness of the flowing of liquid from the liquid-storing chamber 130 for atomizing.

The above shows only embodiments of the present disclosure, but does not limit the scope of the present disclosure. Any equivalent structure or equivalent process transformation made based on the specification and the accompanying drawings of the present disclosure, applied directly or indirectly in other related arts, shall be included in the scope of the present disclosure.

## Claims

1. A atomizer (100), comprising:
a housing (110), provided with an air inlet (111) and an air outlet (112);
an airflow channel (120), formed in the housing (110) and running through the air inlet (111) and the air outlet (112);
a liquid-storing chamber (130), disposed in the housing (110);
a atomization assembly (140), disposed in the airflow channel (120) and in fluid communication with the liquid-storing chamber (130);
an air intake valve (150), disposed in the airflow channel (120) between the air inlet (111) and the atomization assembly (140), wherein an air outlet portion of the air intake valve (150) is disposed close to the atomization assembly (140), an air inlet portion of the air intake valve (150) is disposed away from the atomization assembly (140), and a leaked liquid storage (151) for storing leaked liquid is formed between the air intake valve (150) and the atomization assembly (140);
a gulp valve (160), disposed in the housing (110), wherein an air outlet portion of the gulp valve (160) is located in the liquid-storing chamber (130), and an air inlet portion of the gulp valve (160) is communicated with external air; and
a mouthpiece valve (170), disposed in the airflow channel (120) and located between the air outlet (112) and the atomization assembly (140), wherein an air outlet portion of the mouthpiece valve (170) faces the air outlet (112), and an air inlet (111) of the mouthpiece valve (170) faces the atomization assembly (140).

2. The atomizer (100) of claim 1, wherein the air intake valve (150) is opened when pressure of the air inlet portion side of the air intake valve (150) is greater than pressure in the airflow channel (120) on the air outlet portion side of the air intake valve (150) by at least 100 pa.

3. The atomizer (100) of claim 1, wherein the gulp valve (160) is located on a first end provided with the air outlet (112) of the housing (110); and/or
the gulp valve (160) is located on a second end provided with the air inlet (111) of the housing (110); and/or
the gulp valve (160) is located on a side surface between the first end and the second end of the housing (110).

4. The atomizer (100) of claim 3, wherein there are three gulp valves, and the three gulp valves are respectively located on the first end provided with the air outlet (112) of the housing (110), the second end provided with the air inlet (111) of the housing (110), and the side surface between the first end and the second end of the housing (110).

5. The atomizer (100) of claim 1, wherein the gulp valve (160) is opened when pressure of the air inlet portion side of the gulp valve (160) is greater than pressure in liquid-storing chamber (130) by at least 100 pa.

6. The atomizer (100) of claim 1, wherein the mouthpiece valve (170) is opened when pressure of the air inlet portion side of the mouthpiece valve (170) is greater than pressure outside the air outlet portion side of the mouthpiece valve (170) by at least 100 pa.

7. The atomizer (100) of claim 1, wherein the air intake valve (150), the gulp valve (160), and the mouthpiece valve (170) are all one-way valves (180), and each of the one-way valves (180) comprises:
a base (181), provided with a through hole; and
a deformable wall (182), disposed on the through hole and provided with a notch (1851), wherein one side of the deformable wall (182) connected to the through hole forms the air inlet portion, and the notch (1851) forms the air outlet portion.

8. The atomizer (100) of claim 7, wherein the deformable wall (182) comprises two first deformable walls, and the two first deformable walls extend outward from the through hole and gradually draw close to each other to form a strip-shaped end (185) and, the notch (1851) is elongated and formed at the strip-shaped end (185).

9. The atomizer (100) of claim 7, wherein the deformable wall (182) is curved to form a cylinder, the deformable wall (182) extends outward from the through hole and is closed to form a hemispherical end (185), and the notch (1851) is cross-shaped and formed at the hemispherical end (185).

10. The atomizer (100) of claim 7, wherein the deformable wall (182) is curved to form a cylinder, the deformable wall (182) extends outward from the through hole and is closed to form a planar end (185), and two arc-shaped notches are formed at the planar end (185), wherein the notch (1851) is inferior arc shaped.

11. The atomizer (100) of claim 7, wherein the deformable wall (182) is curved to form a cylinder, the deformable wall (182) extends outward from the through hole and is closed to form a planar end (185), and the notch (1851) is arc-shaped and formed at the planar end (185), wherein the notch (1851) is in a shape of a major arc, and a support member (1822) supporting the planar end (185) is disposed in the deformable wall (182).

12. The atomizer (100) of claim 7, wherein the deformable wall (182) is curved to form a cylinder, the deformable wall (182) extends outward from the through hole and is closed to form a planar end (185), and the notch (1851) is arc-shaped and formed at the side surface.

13. The atomizer (100) of any of claims 1 to 12, wherein the housing (110) comprises a mounting base (113), and the mounting base (113) is configured to support the atomization assembly (140) and the mounting base (113) is configured to define the air inlet (111).

14. An electronic atomization device (200), comprising the atomizer (100) according to any one of claims 1-13.

15. The electronic atomization device (200) of claim 14, comprises
a power supply assembly, configured to supply power to the atomizer (100).

## Patentansprüche

1. Ein Zerstäuber (100), der Folgendes umfasst:
Ein Gehäuse (110), das mit einem Lufteintritt (111) und einem Luftaustritt (112) versehen ist;
einen Luftstromkanal (120) der am Gehäuse (110) ausgebildet ist und durch den Lufteintritt (111) und den Luftaustritt (112) geht;
eine Flüssigkeitsspeicherkamer (130), die am Gehäuse angeordnet ist;
eine Zerstäubergruppe (130), die in dem Luftstromkanal (120) angeordnet ist und in Fluidverbindung mit der Flüssigkeitsspeicherkammer (130) steht;
ein Lufteinlassventil (150), das im Luftstromkanal (120) zwischen dem Lufteintritt (111) und der Zerstäubergruppe (140) angeordnet ist, wobei ein Luftaustrittsteil des Lufteinlassventils (150) nahe der Zerstäubergruppe (140) angeordnet ist, ein Lufteintrittsteil des Lufteinlassventils (150) weg von der Zerstäubergruppe (140) angeordnet ist und eine Speicherung (151) für Flüssigkeitsdurchsickerung für die Speicherung von Durchsickerungsflüssigkeit zwischen dem Lufteinlassventil (150) und der Zerstäubergruppe (140) gebildet ist;
ein im Gehäuse (110) angeordnetes Luftaufnahmeventil (160), wobei ein Luftaustrittsteil des Luftaufnahmeventils (160) in der Flüssigkeitsspeicherkammer (130) angeordnet ist, ein Lufteintrittsteil des Luftaufnahmeventils (160) mit der Aussenluft in Verbindung steht; und
ein Mundstückventil (170), das im Luftstromkanal (120) eingerichtet und zwischen dem Luftaustritt (112) und der Zerstäubergruppe (140) angeordnet ist, wobei ein Luftaustrittsteil des Mundstückventils (170) zum Luftaustritt (112) hin gerichtes ist und ein Lufteintritt (111) des Mundstückventils (170) zu der Zerstäubergruppe (140) hin gerichtet ist.

2. Der Zerstäuber (100) gemäss Anspruch 1, bei dem das Lufteinlassventil (150) sich öffnet, wenn der Druck an der Seite des Lufteintrittteils des Lufteinlassventils (150) um mindestens 100 pa höher ist als der Druck im Luftstromkanal (120) an der Seite des Luftaustrittteils des Lufteintrittventils (150).

3. Der Zerstäuber (100) gemäss Anspruch 1, bei dem das Luftaufnahmeventil (160) an einem ersten Ende, das mit dem Luftaustritt (112) des Gehäuses (110) bereitgestellt wird, angeordnet ist; und /oder
das Luftaufnahmeventil (160) an einem zweiten Ende, dass mit dem Lufteintritt (111) des Gehäuses (110) bereitgestellt wird, angeordnet ist; und/oder
das Luftaufnahmeventil (160) an einer Seitenfläche zwischen dem ersten Ende und dem zweiten Ende des Gehäuses (110) angeordnet ist.

4. Der Zerstäuber (100) gemäss Anspruch 3, bei dem drei Luftaufnahmeventile vorhanden sind, und die drei Luftaufnahmeventile jeweils an dem mit dem Luftaustritt (112) des Gehäuses (110) bereitgestellten ersten Ende, dem mit dem Lufteintritt (111) des Gehäuses (110) bereitgestellten zweiten Ende und an der Seitenfläche zwischen dem ersten Ende und dem zweiten Ende des Gehäuses (110) angeordnet sind.

5. Der Zerstäuber (100) gemäss Anspruch 1, bei dem das Luftaufnahmeventil (160) sich öffnet, wenn der Druck an der Seite des Lufteintrittteils des Lufteintrittventils (160) um mindestens 100 pa höher ist als der Druck in der Flüssigkeitsspeicherkammer (130).

6. Der Zerstäuber (100) gemäss Anspruch 1, bei dem das Mundstückventil(170) sich öffnet, wenn der Druck des Lufteintrittseitenteils des Mundstückventils (170) um mindestens 100 pa höher ist als der DrucK ausserhalb des Luftaustrittseitenteils des Mundstückventils (170).

7. Der Zerstäuber (100) gemäss Anspruch 1, bei dem das Lufteinlassventil (150), das Luftaufnahmeventil (160) und das Mundstückventil (170) alles Einwegventile (180) sind und jedes der Einwegventile (180) Folgendes umfasst:
Eine mit einem Durchgangsloch versehene Grundfläche (181); und
eine verformbare Wand (182), die am Durchgangsloch angeordnet ist und einen Schlitz (1851) aufweist, wobei eine an das Durchgangsloch angeschlossene Seite der verformbaren Wand (182) einen Lufteintrittsteil und der Schlitz (1851) den Luftaustrittsteil bildet.

8. Der Zerstäuber (100) gemäss Anspruch 7, bei dem die verformbare Wand (182) zwei erste verformbare Wände umfasst und die beiden ersten verformbaren Wände sich ab dem Durchgangsloch nach aussen erstrecken und sich nach und nach nähern, um ein streifenförmiges Ende (185) zu bilden, und wobei der Schlitz (1851) länglich und am streifenförmigen Ende (185) ausgebildet ist.

9. Der Zerstäuber (100) gemäss Anspruch 7, bei dem die verformbare Wand (182) gebogen ist, um einen Zylinder zu bilden, die verformbare Wand (182) sich ab dem Durchgangsloch nach aussen erstreckt und zwecks Bilden eines hemisphärischen Endes (185) geschlossen wird, und der Schlitz (1851) kreuzförmig und am hemisphärischen Ende (185) geformt ist.

10. Der Zerstäuber (100) gemäss Anspruch 7, bei dem die verformbare Wand (182) gebogen ist, um einen Zylinder zu bilden, die verformbare Wand (182) sich ab dem Durchgangsloch nach aussen erstreckt und zwecks Bilden eines ebenen Endes (185) geschlossen wird, und wobei zwei bogenförmige Schlitze am ebenen Ende (185) ausgebildet sind, wobei der Schlitz (1851) unten bogenförmig ist.

11. Der Zerstäuber (100) gemäss Anspruch 7, bei dem die verformbare Wand (182) gebogen ist, um einen Zylinder zu bilden, die verformbare Wand sich ab dem Durchgangsloch nach aussen erstreckt und zwecks Bilden eines ebenen Endes (185) geschlossen ist, wobei der Schlitz (1851) bogenförmig und am ebenen Ende (185) ausgebildet ist, wobei der Schlitz (1851) die Form eines grösseren Bogens aufweist und ein Stützglied (1822), das das ebene Ende (185) stützt, an der verformbaren Wand (182) angeordnet ist.

12. Der Zerstäuber (100) gemäss Anspruch 7, bei dem die verformbare Wand (182) zwecks Bilden eines Zylinders gebogen ist, die verformbare Wand (182) sich ab dem Durchgangsloch nach aussen estreckt und zwecks Bilden eines ebenen Endes (185) geschlossen wird, und wobei der Schlitz (1851) bogenförmig und an der Seitenfläche ausgebildet ist.

13. Der Zerstäuber (100) gemäss Anspruch 1 bis 12, bei dem das Gehäuse (110) eine Montagefläche (113) umfasst, und die Montagefläche (113) konfiguriert ist, um die Zerstäubergruppe (140) zu stützen, und wobei die Montagefläche (113) zur Definierung des Lufteintritts (111) konfiguriert ist.

14. Eine elektronische Zerstäubervorrichtung (200), die den Zerstäuber (100) gemäss einem der Ansprüche 1-13 umfasst.

15. Die elektronische Zerstäubervorrichtung (200) gemäss Anspruch 14, die eine Stromversorgungsgruppe umfasst, die konfiguriert ist, um den Zerstäuber (100) mit Strom zu versorgen.

## Revendications

1. Atomiseur (100), comprenant
un boîtier (110), pourvu d'une entrée d'air (111) et d'une sortie d'air (112); un canal de circulation d'air (120), formé dans le boîtier (110) et traversant l'entrée d'air (111) et la sortie d'air (112);
une chambre de stockage de liquide (130), disposée dans le boîtier (110);
un dispositif d'atomisation (140), disposé dans le canal de circulation d'air (120) et en communication fluidique avec la chambre de stockage de liquide (130);
une soupape d'admission d'air (150), disposée dans le canal de circulation d'air (120) entre l'entrée d'air (111) et le dispositif d'atomisation (140), dans laquelle une partie de sortie d'air de la soupape d'admission d'air (150) est disposée à proximité du dispositif d'atomisation (140), une partie d'entrée d'air de la soupape d'admission d'air (150) est disposée à l'écart du dispositif d'atomisation (140), et un stockage de liquide ayant fui (151) pour stocker un liquide ayant fui est formé entre la soupape d'admission d'air (150) et le dispositif d'atomisation (140);
une soupape d'aspiration (160), disposée dans le boîtier (110), dans laquelle une partie de sortie d'air de la soupape d'aspiration (160) est située dans la chambre de stockage de liquide (130), et une partie d'entrée d'air de la soupape d'aspiration (160) est en communication avec l'air extérieur; et
une soupape d'embouchure (170), disposée dans le canal de circulation d'air (120) et située entre la sortie d'air (112) et le dispositif d'atomisation (140), dans laquelle une partie de sortie d'air de la soupape d'embouchure (170) fait face à la sortie d'air (112), et une entrée d'air (111) de la soupape d'embouchure (170) fait face à le dispositif d'atomisation (140).

2. Atomiseur (100) selon la revendication 1, dans lequel la soupape d'admission d'air (150) s'ouvre lorsque la pression de la partie d'admission d'air du côté de la soupape d'admission d'air (150) est supérieure, d'au moins 100 pa, à la pression dans le canal de circulation d'air (120) sur la partie de sortie d'air de la soupape d'admission d'air (150).

3. Atomiseur (100) selon la revendication 1, dans lequel la soupape d'aspiration (160) est située sur une première extrémité munie de la sortie d'air (112) du boîtier (110);
et/ou la soupape d'aspiration (160) est située sur une deuxième extrémité munie avec l'entrée d'air (111) du boîtier (110); et/ou
la soupape d'admission (160) est située sur une surface latérale entre la première et la deuxième extrémité du boîtier (110).

4. Atomiseur (100) selon la revendication 3, dans lequel il y a trois soupapes d'aspiration, et les trois soupapes d'aspiration sont respectivement situées sur la première extrémité pourvue de la sortie d'air (112) du boîtier (110), la deuxième extrémité pourvue de l'entrée d'air (111) du boîtier (110), et la surface latérale comprise entre la première extrémité et la deuxième extrémité du boîtier (110).

5. Atomiseur (100) selon la revendication 1, dans lequel la soupape d'aspiration (160) est ouverte lorsque la pression de la partie d'entrée d'air de la soupape d'aspiration (160) est supérieure d'au moins 100 pa à la pression dans la chambre de stockage de liquide (130).

6. Atomiseur (100) selon la revendication 1, dans lequel la soupape d'embouchure (170) est ouverte lorsque la pression du côté de la portion d'entrée d'air de la soupape d'embouchure (170) est supérieure d'au moins 100 pa à la pression à l'extérieur de la portion de sortie d'air de la soupape d'embouchure (170).

7. Atomiseur (100) selon la revendication 1, dans lequel la soupape d'admission d'air (150), la soupape d'aspiration (160) et la soupape d'embouchure (170) sont toutes des soupapes unidirectionnelles (180), et chacune des soupapes unidirectionnelles (180) comprend:
une base (181), pourvue d'un trou de passage; et
une paroi déformable (182), disposée sur le trou de passage et pourvue d'une encoche (1851), dans laquelle un côté de la paroi déformable (182) relié au trou de passage forme la partie d'entrée d'air, et l'encoche (1851) forme la partie de sortie d'air.

8. Atomiseur (100) selon la revendication 7, dans lequel la paroi déformable (182) comprend deux premières parois déformables, et les deux premières parois déformables s'étendent vers l'extérieur à partir du trou traversant et se rapprochent progressivement l'une de l'autre pour former une extrémité en forme de bande (185) et l'encoche (1851) est allongée et formée à l'extrémité en forme de bande (185).

9. Atomiseur (100) selon la revendication 7, dans lequel la paroi déformable (182) est courbée pour former un cylindre, la paroi déformable (182) s'étend vers l'extérieur à partir du trou de passage et est fermée pour former une extrémité hémisphérique (185), et l'encoche (1851) est en forme de croix et elle est pratiquée à l'extrémité hémisphérique (185).

10. Atomiseur (100) selon la revendication 7, dans lequel la paroi déformable (182) est courbée pour former un cylindre, la paroi déformable (182) s'étend vers l'extérieur à partir du trou de passage et est fermée pour former une extrémité plane (185), et deux encoches en forme d'arc sont formées à l'extrémité plane (185), l'encoche (1851) étant en forme d'arc dans sa partie inférieure.

11. Atomiseur (100) selon la revendication 7, dans lequel la paroi déformable (182) est courbée pour former un cylindre, la paroi déformable (182) s'étend vers l'extérieur à partir du trou de passage et est fermée pour former une extrémité plane (185), et l'encoche (1851) est en forme d'arc et formée à l'extrémité plane (185), l'encoche (1851) ayant la forme d'un arc plus grande, et un élément de support (1822) soutenant l'extrémité plane (185) étant disposé dans la paroi déformable (182).

12. Atomiseur (100) selon la revendication 7, dans lequel la paroi déformable (182) est courbée pour former un cylindre, la paroi déformable (182) s'étend vers l'extérieur à partir du trou de passage et est fermée pour former une extrémité plane (185), et dans lequel l'encoche (1851) est en forme d'arc et est formée sur la surface latérale.

13. Atomiseur (100) selon l'une des revendications 1 à 12, dans lequel le boîtier (110) comprend une base de montage (113), et la base de montage (113) est configurée pour supporter le dispositif d'atomisation (140) et la base de montage (113) est configurée pour définir l'entrée d'air (111).

14. Dispositif électronique d'atomisation (200), comprenant l'atomiseur (100) selon l'une quelconque des revendications 1 à 13.

15. Dispositif électronique d'atomisation (200) selon la revendication 14, comprenant un bloc d'alimentation électrique, configuré alimenter l'atomiseur (100).
